# EUROPÄISCHE PATENTSCHRIFT

(11) **EP 1 515 204 B1**
(45) Veröffentlichungstag und Bekanntmachung des Hinweises auf die Patenterteilung: **30.05.2012**
(21) Anmeldenummer: 04104023.9
(22) Anmeldetag: 20.08.2004
(51) Int. Cl.: G05B 19/042

(54) **Antriebssystem mit dezentraler Intelligenz**
Drive system with decentralised intelligence
Système de commande avec intelligence décentralisée

(30) Priorität: 21.08.2003 DE 10338514
(43) Veröffentlichungstag der Anmeldung: 16.03.2005
(73) Patentinhaber: Lenze Automation GmbH, 40667 Meerbusch (DE)
(72) Erfinder: Tinebor, Manfred, 32683 Barntrup (DE); Ehlich, Martin, 32689 Kalletal (DE)
(74) Vertreter: Leonhard, Frank Reimund

(56) Entgegenhaltungen:
- EP-A- 0 843 243
- DE-C1- 19 708 985
- DE-C1- 19 954 855
- DE-U1- 29 710 056
- WEIDAUER J: "Flexible machines using distributed intelligent drives" ADVANCED MOTION CONTROL, 1998. AMC '98-COIMBRA., 1998 5TH INTERNATIONAL WORKSHOP ON COIMBRA, PORTUGAL 29 JUNE-1 JULY 1998, PISCATAWAY, NJ, USA,IEEE, US, 29. Juni 1998 (1998-06-29), Seiten 481-486, XP010317730 ISBN: 0-7803-4484-7

## Beschreibung

Die Erfindung befasst sich mit einem busgekoppelten Antriebssystem und einem Verfahren zur Kopplung von elektrischen Antrieben und Antriebsreglern in einen solchen Antriebssystem, wobei unter einem Antriebssystem zumindest eine Antriebssteuerung zu verstehen ist, welche zumindest einen elektrischen oder hydraulischen Antrieb ansteuert. Die eine Antriebssteuerung selbst beinhaltet einen Regler und ein Stellglied, welches Leistungssignale zum elektrischen Antrieb überträgt, um diesen zur Bewegung oder zum Bremsen zu veranlassen. Ein Stellglied ist beispielsweise ein Umrichter oder ein Wechselrichter, welcher Strom- oder Spannungssignale eines ersten Mehrphasennetzes in solche eines zweiten Antriebsnetzes überträgt, wobei das zweite Antriebsnetz sowohl ein versetztes Mehrspannungsnetz, insbesondere ein Drehstromnetz, wie auch ein Gleichspannungsnetz zum Antrieb von Gleichspannungsmotoren sein kann.

Bei einem Antriebssystem sind mehrere dieser Kombinationen aus Antriebssteuerung und Antrieben vorgesehen, wobei jeweils ein Antrieb einer Antriebssteuerung so zugeordnet ist, dass die antriebs-stromtragfähigen Antriebsleitungen zwischen diesem Antriebsregler und dem Antrieb als beispielsweise elektrischer Asynchron- oder Synchron-Motor geschaltet sind.

Mehrere dieser Doppelsysteme können kaskadiert in einer Anwendung platziert sein, wobei die Motoren beispielsweise mechanisch gekoppelt sind, so dass sie elektrisch entsprechend anzusteuern sind.

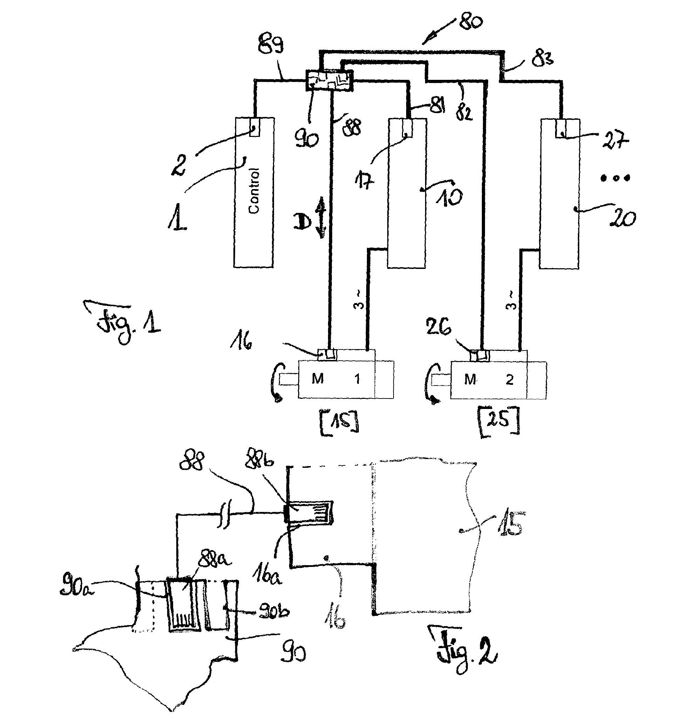

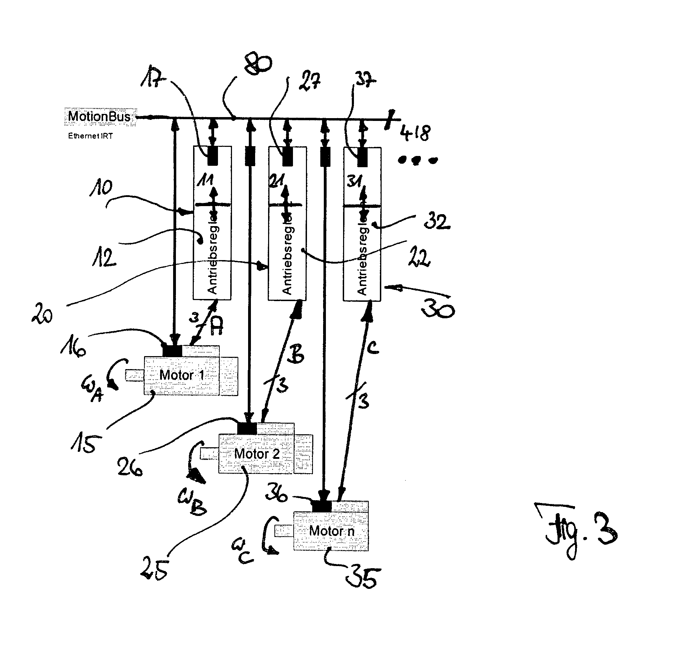

Aus dem Stand der Technik der DE-U 297 10 056 (Kettner) ist dem Fachmann eine Regelanlage zugänglich. Nach der dortigen Figur 2 sind die Bus-Anschaltungen jeweils durchgeschleift. Diese Durchschleifung betrifft mehrere nebeneinander betriebene Motoren (Antriebe), die jeweils eine Bus-Anschaltung und einen Umrichter besitzen. Am jeweiligen Klemmenkasten des Motors ist eine Starkstromquelle angeschlossen, die als Energiebus ebenfalls zu allen Antrieben reicht. Sollen Signale von einem Motor zu einem anderen Motor gelangen, muss das über eine nicht dargestellte Messstelle am Motor gehen, die entweder über den Umrichter oder direkt zur Bus-Anschaltung (dort 8) gelangt, um von dort über die Bus-Verbindung zu der anderen Bus-Anschaltung weitergeschleift zu werden. Das dort beschriebene Steuerungskonzept lässt eine gewisse Unmittelbarkeit vermissen, mit der Messdaten des Motors schneller zu einer Auswertung gelangen können, und dabei auch zu anderen Auswerteschaltungen, die nicht diejenige Auswerteschaltung ist, die dem jeweiligen Antrieb zugeordnet ist. In einer anderen Ausführung der dortigen Figur 3 wird eine Umrichter- und Bus-Anschaltung im dortigen Klemmenkasten eines Motors integriert und wird als Blackbox behandelt, vgl. dort Seite 3, ab Zeile 25. Die dortige Datenleitung und die Energieversorgungsleitung werden in äußerst einfacher Art und Weise an den Klemmenanschlüssen (im Klemmenkasten) angeschlossen. Ob der Bus dabei am Umrichter oder direkt am Motor angeschaltet ist, lässt sich der dortigen Offenbarung nicht entnehmen.

Die Erfindung geht **von der technischen Problemstellung** (Aufgabe) aus, Schnittstellen am Antriebsregler zu reduzieren. Gleichzeitig soll eine zuverlässige Arbeitsweise und eine möglichst umfassende Kontrolle und Überwachung des jeweils gesteuerten Antriebs möglich sein, ohne dass der Antriebsregler über hersteller- oder anwendungsspezifische Signalleitungen direkt mit dem Motor verbunden ist.

Gelöst wird die Aufgabe mit einem bus-gekoppelten Antriebssystem nach Anspruch 1 oder einem Verfahren nach Anspruch 11.

Die beanspruchte Erfindung kommt dabei ohne Betriebsdaten oder Betriebssignale übermittelnde Verbindungen zwischen dem Motor und dem Antriebsregler aus, welche normalerweise eine Vielzahl von Normen erfüllen müssen, eine Vielzahl von Varianten bereitstellen müssen und deshalb einen großen Umfang an Vielseitigkeit ermöglichen müssten, wenn sie für eine Vielzahl von Antrieben und entsprechende Messwertgeber angepasst sein soll. Die Mengen an mit einem Antriebsregler mitzuliefernden dedizierten Schnittstellen kann auf nahe Null reduziert werden, soweit diejenigen Schnittstellen angesprochen sind, welche ausgangsseitig mit dem Antrieb in Verbindung stehen. Eine einzige vorgesehene Bus-Schnittstelle ist diejenige Eingangsschnittstelle an dem Antriebsregler, über welche er ohnehin seine Sollwerte und Vorgaben, ggf. auch andere Parameter von einer übergeordneten Steuerung mit einer eigenen Bus-Schnittstelle erhält. Dazuhin wird der Antrieb selbst mit einer gleichen Schnittstelle ausgestattet, welche dem Bus-Protokoll entspricht, welche auch der Antriebsregler auf seiner Eingangsschnittstelle aufweist.

Dem Antrieb ist diese Bus-Schnittstelle eng benachbart zugeordnet, insbesondere in ihn eingebaut (Anspruch 1, Anspruch 10), wobei als Aufnahmeraum für die Schnittstelle der Klemmkasten oder ein gesonderter Montageraum Anwendung finden kann, der am Motor fest angeordnet ist. Auf einem "Motionbus" (Anspruch 1), welcher ein deterministischer Bus ist, soweit die hier in Rede stehenden Antriebsaufgaben zu erfüllen sind, werden die Sollwerte und Messwerte übertragen, wobei die Messwerte zunächst von dem Antrieb auf den Motionbus als Steuer-und Datenbus übertragen werden bzw. diesem zur Abholung zur Verfügung gestellt werden. Der zugeordnete Regler kann über diesen Bus Messwerte von dem Antrieb abfragen, den er auf seiner Ausgangsseite über das Stellglied ansteuert.

Derselbe Antriebsregler ist aber auch in der Lage, Betriebssignale, beispielsweise Temperaturwerte oder Drehzahlwerte (Anspruch 4 oder 5) von einem anderen Antrieb über denselben Motionbus abzufragen, ohne dass es gesonderter Anschlüsse oder Querkopplungen durch Anbringung zusätzlicher Leitungen bedarf, welche die Messsignale eines Motors (Antriebs) auf mehrere Antriebsregler verteilen.

Erfindungsgemäß wird lediglich ein Bus vorgesehen, der als Steuer- und Datenbus geeignet ist, eine digitale Übertragung zumindest von Sollwerten (zu einem, zwei oder mehreren Antriebsreglern) und von Messwerten (von den mehreren Antrieben) zu erreichen. Ein geeignetes Protokoll ist ein Ethernet-Bus als ein Ethernet-IRT-Bussystem, welches für die antriebsspezifischen Aufgaben als deterministisch anzusehen ist. Multiprozessorfähig ist dieser Bus ohnehin.

Dazu ist jedem elektrischen Antrieb eine Bus-Schnittstelle zugeordnet, welche ein gleiches Protokoll zur Verfügung stellt, welches als "funktional gleich" beschrieben werden kann. Mit diesem Bus wird über das Bus-Protokoll von einer ersten Steckerstelle am Antrieb zu einer zweiten Steckerstelle an einer Sammelschnittstelle, beispielsweise einem Switch oder Router, eine erste Verbindung zur Verfügung gestellt und von der Sammel-Schnittstelle eine beliebige zweite Verbindung zu einem der Antriebsregler und deren Eingangsschnittstelle, welche dieselbe Steckerstelle ist. Hierzu können zwei Bus-Kabel mit jeweils mehreren Adern verwendet werden, wenn eine elektrische Bus-Kopplung angewendet wird. Es können aber auch Lichtleiter für das Bus-System verwendet werden, wobei die Steckerstellen dann Aufnahmen für Faserenden sind, zur Einkopplung und Auskopplung von Lichtsignalen.

Die Steckerstelle am Antrieb und die Steckerstelle am Antriebsregler sind gleich ausgestaltet. Die Sammelschnittstelle des Busses verbindet sämtliche am Antriebssystem beteiligten Antriebsregler und Antriebe, wobei nicht nur eine solche Sammelschnittstelle vorgesehen sein kann, sondern verteilt über das Antriebssystem auch mehrere, die selbst wieder über ein gleiches Bus-Kabel in Verbindung stehen.

Zusätzlich kann eine übergeordnete Steuerung vorgesehen sein, welche ebenfalls an beliebiger Stelle in das Bus-System eingekoppelt wird.

Vereinfacht werden dabei nicht nur die Anzahl von mitzuliefernden Sonderschnittstellen oder Signalschnittstellen für die Aufnahme von Betriebssignalen der Antriebe. Verbessert wird dabei auch die räumliche Lage der zu führenden Leitungen. Es können in bestimmten Anwendungssituationen kürzere Zuführungen der Betriebssignale von den Antrieben zu einem in der Nähe liegenden Bus-Kabel über eine Sammel-Schnittstelle eingekoppelt werden. Die Signalführung über die Bus-Leitung muss nicht mehr zwingend parallel und entsprechend der Länge der antriebs-stromtragfähigen Antriebsleitungen sein (Anspruch 9), vielmehr können die Messwerte der Antriebe über kürzere oder längere Bus-Kabel übertragen werden, wie es die Anwendung ermöglicht. Bei einer wesentlichen Verkürzung oder wesentlichen Verlängerung sind Größenordnungen von zumindest ± 20% bis über ± 50% vorgesehen.

Eine kürzere Leitung ist ggf. möglich, wenn ein Bus näher am Motor vorbeiführt, als der Abstand des Antriebs zum Antriebsregler. Eine längere Bus-Leitungsführung ist möglich, weil die Übertragung digital über Bus-Kabel erfolgt und die Signalqualität praktisch unabhängig von der Bus-Kabellänge ist.

Eine Ausgestaltung des Busses als bidirektionaler Bus versteht sich so, dass nicht dieselben Signale bidirektional zu übertragen sind, sondern die Signale als Steuersignale beispielsweise zum Motor gegeben werden, wie ein Signal zur Ansteuerung einer Bremse am Motor (Anspruch 7). Ein in anderer Richtung führendes Signal als Messsignal vom Motor zum Bus (bzw. weiter zum anfordernden Antriebsregler) ist bspw. ein Temperatursignal, so dass der Bus selbst bidirektional arbeitet, aber nicht jedes Signal selbst bidirektional ausgestaltet sein muss (Anspruch 6).

Die Sammelschnittstelle als Router oder Switch oder Hub schafft Verbindungen von mehreren Bus-Kabeln und bietet eine Vielzahl von Steckerstellen, wobei es nicht von Belang ist, welches Bus-Kabel, respektive welcher Bus-Teilnehmer, auf welcher Steckerstelle platziert wird. Die eindeutige Zuordnung erfolgt durch Festlegung von Adressen der Bus-Teilnehmer am jeweiligen Bus-Teilnehmer, so dass die Verschaltung über die Steckerstellen und die Bus-Sammelschnittstellen nicht kritisch und leicht zu realisieren ist.

Eine Steckerstelle bringt es mit sich, dass sie steckbar ist, als elektrische Schnittstelle oder als optische Schnittstelle, und dabei die Leitung lösbar aufnimmt. Im Falle eines mit Kupferadern arbeitenden elektrischen Busses ist eine elektrische Kontaktierung beim Einstecken vorgesehen (Anspruch 8).

Durch die Bus-Kopplung ist es jedem Antriebsregler möglich, von jedem beliebigen Antrieb Messsignale in digitaler Form abzufragen und über den Bus geliefert zu bekommen (Anspruch 3, Anspruch 11). Eine Bereitstellung eines solchen Messsignals erfolgt dabei über jeweils zumindest zwei Bus-Schnittstellen, eine Schnittstelle am Motor und eine identische Schnittstelle am Antriebsregler, wobei auch zumindest zwei weitere Bus-Schnittstellen beteiligt sein können, wenn die zumindest eine Bus-Sammel-Schnittstelle als Switch oder Router vorgesehen ist.

Keines dieser Messsignale von den Antrieben wird vorher zur Einflussnahme auf die Ansteuerung des Antriebs einem Antriebsregler in anderer Form zugeführt (Anspruch 2,11).

Es findet keine Verbindung über Leitungsführungen statt, die vom Antrieb zum Antriebsregler direkt in einer nicht im Bus-Protokoll stattfindenden Übertragung erfolgt. Die einzige Übertragung dieser Signale erfolgt über den Bus in einer digitalen Form mit einem diesem Bus eigenen Protokoll und vereinheitlicht über die Bus-Schnittstellen und Steckerstellen des Busses, nicht über anwendungsspezifische Stecker/Buchsen oder hersteller-dedizierte (definierte) Schnittstellen von Messgliedern.

Der Bus selbst dient auch zur Übertragung von zumindest Sollwerten einer übergeordneten Steuerung, welche an die einzelnen Antriebsregler über den Bus übertragen werden. Diese Sollwerte werden nicht zwingend zum Motor übertragen, aber der Bus ist geeignet, sie zur Systemregelung zu übertragen.

Auch weitere Signale sind über den Bus übertragbar, wie Parameter des Antriebssystems, unter anderem Grenzwerte und Einstellwerte für die Regler in den Antriebssteuerungen. Unter Stellsignalen werden dabei solche Signale verstanden, welche aktive Funktion haben, also beispielsweise ein solches Stellsignal zur Ansteuerung (Aktivierung) einer Bremse in einem jeweiligen Antrieb. Dieses ist wiederum der Bus-Schnittstelle des Motors übertragen und dort mit dezentraler Intelligenz in ein entsprechendes Aktorsignal am Antrieb umgesetzt.

Das Antriebssystem (Anspruch 1) ist über den Bus gekoppelt. Auf diesem Bus können mehrere Antriebssteuerungen Daten austauschen, ohne eine übergeordnete Steuerung.

Es kann eine übergeordnete Steuerung vorgesehen sein, welche auf ein, zwei oder mehrere Antriebsregler zugreift und sie koordiniert. Von zumindest zwei Antriebssteuerungen geht Anspruch 1 aus. Auch Anspruch 11 spricht von zwei Antriebsreglern, die zwei motorische Antriebe steuern. Dabei ist herausgegriffen, dass einer der Antriebsregler Messdaten von beiden Antrieben über den Bus erhält, ohne zwingende Beteiligung des anderen Antriebsreglers.

Zumindest ein dritter Antriebsregler kann vorgesehen sein, der repräsentativ für auch eine Mehrzahl von dritten Antriebsreglern steht.

Die Erfindung wird nachfolgend anhand von Ausführungs**beispielen** erläutert.
- **Figur 1**: veranschaulicht ein allgemeines Konzept eines Motionbusses 80 mit zwei beteiligten Antriebsreglern 10,20 und einer übergeordneten Steuerung 1, als Systemsteuerung.
- **Figur 2**: veranschaulicht einen Ausschnitt daraus zur Verdeutlichung der Steckerstellen an einem Bus-Teilnehmer 15 und einer Sammelschnittstelle 90.
- **Figur 3**: veranschaulicht einen detaillierteren Aufbau von sechs Bus-Teilnehmern an einem Motionbus 80, wobei drei drehfähige Antriebe 15,25,35 und drei Antriebsregler 10,20,30 vorgesehen sind, die auf einem gemeinsamen Bus 80 als "Motionbus" gekoppelt sind. Alles bildet ein autarkes Antriebssystem.

In **Figur 1** ist ein Motionbus 80 in einem ersten Ausführungsbeispiel vorgesehen, welcher ein deterministischer Bus ist, der über ein Bus-Protokoll verschiedene Bus-Teilnehmer verbindet. Als Bus-Teilnehmer sind die übergeordnete Steuerung 1, zwei Antriebsregler 10, 20 und zwei Antriebe M1 und M2 als motorische Antriebe 15,25 vorgesehen, welche als Drehfeldmaschinen, im Beispiel Asynchron-Maschinen, ausgestaltet sind. Sie werden angetrieben über Antriebsleitungen, welche größere Querschnitte besitzt und antriebs-stromtragfähig ist. Im gezeigten Beispiel sind jeweils drei Phasen vorgesehen zur Ansteuerung des Drehfeldmotors 15 oder 25.

Auf der Bus-Seite ist der Steuer- und Datenbus 80 geeignet, eine digitale Übertragung von zumindest Sollwerten zu den Antriebsreglern an die Bus-Schnittstellen 17,27 zu übertragen. Messwerte werden ebenfalls von dem Bus 80 übertragen, ausgehend von Schnittstellen 16,26, welche den Antrieben 15,25 zugeordnet sind. Die eng benachbarte Zuordnung ist so gewählt, dass diese Schnittstellen mit ihrer Elektronikansteuerung in dem Motor jeweils integriert sind, beispielsweise in einem Klemmenkasten oder in einem gesonderten Bauraum zur Aufnahme von Elektronik-Komponenten. Von außen zugänglich ist eine Buchse 16a vorgesehen, in die ein Bus-Kabel 88 eingesteckt wird, mit einem Anschlussstecker 88b, welches Bus-Kabel 88 mit seinem anderen Anschlussstecker 88a, die beiden Anschlussstecker sind identisch, in einer Buchse 90a oder 90b einer Sammelschnittstelle 90 eingesteckt ist. An dieser Sammelschnittstelle werden auch mehrere andere Bus-Leitungen auf nicht gesondert dargestellten Steckerstellen 90c,90d, ... zusammengeführt, im Beispiel all diejenigen Bus-Leitungen 89,81,82,83, welche von den anderen Bus-Teilnehmern stammen. Als Sammelschnittstelle bietet sich ein Switch oder ein Hub oder ein Router an, der die Kommunikation auf dem Bus 80 sicherstellt und in der Lage ist, über Adressenzuweisungen alle Bus-Teilnehmer jeweils miteinander so zu verbinden, dass ein Bus-Teilnehmer von einem anderen Bus-Teilnehmer eine Anfrage beantwortet erhält, oder in der Lage ist, Daten an den anderen Bus-Teilnehmer zu übermitteln.

Der Bus 80 arbeitet mit einem spezifischen Protokoll, welches nach Art des gewählten Busses vorgegeben ist. Alle Bus-Teilnehmer 1,10,20,15,25 bedienen dieses Protokoll funktionsidentisch.

**Figur 2** veranschaulicht einen Ausschnitt aus der beschriebenen Buskopplung über das eine Buskabel 88 von dem ersten Motor 15 zu der Sammelschnittstelle 90 als bevorzugt Switch. Jeder Busstecker hat eine Gruppe von Leitungen, bevorzugt sechs bis acht Leitungen, die bei einer elektrisch leitfähigen Bus-Struktur in der Lage sind, die auf den Bus übertragenen Datensignale zuverlässig und sicher auch über lange Strecken zu führen.

Das Bus-Kabel 88 hat beidseits identische Stecker. Es spielt keine Rolle, an welcher Aufnahmebuchse 90a oder 90b das Bus-Kabel 88 mit seinem Stecker 88a in der Sammelschnittstelle 90 eingesteckt wird, nachdem die eingestellten Adressen des Bus-Teilnehmers 15 in der dort vorgesehenen Bus-Schnittstelle 16 vorgeben, wie er im Bus 80 zu erreichen ist.

Die Bus-Schnittstellen 17 des ersten Antriebsreglers 10 und 27 des zweiten Antriebsreglers 20 sind nur Beispiele. Eine beliebige Vielzahl von weiteren Antriebsreglern können hinzugenommen werden, die ebenfalls Antriebe steuern, wie auch andere Aufgaben im Verbund des Antriebssystems vornehmen können.

Die allgemeine Struktur nach den **Figuren 1 und 2** beschreibt den "Motionbus" 80 mit seiner Sammelschnittstelle 90, von denen auch mehrere über den Bus verteilt angeordnet sein können. Der Motionbus kann beispielsweise als Ethernet-IRT-Bus mit einem zugehörigen, bekannten Protokoll arbeiten. Alle Schnittstellen halten sich zumindest im Rahmen der Antriebsaufgaben an dieses funktionsidentische Protokoll, können im Einzelfall aber auch abweichende Spezifikationen besitzen, soweit diese im Rahmen der Bus-Übertragung nicht verwendet werden. Eine photografische Identität des Bus-Protokolls muß nicht vorhanden sein, lediglich eine Funktionsidentität im Rahmen des verwendeten Übertragungsprotokolls mit den verwendeten Befehlen. Messwerte, die vom Antrieb 15 oder 25 stammen, können von dem Antriebsregler 10 oder 20 über den Bus und die zugeordnete Adresse des jeweiligen Antriebs abgefragt werden. Zur Übertragung des Messwertes führt der Weg von der Schnittstelle 16 am Antrieb über die Sammelschnittstelle 90, das Bus-Kabel 81 und die Schnittstelle 17 zu dem Antriebsregler. Hier wird unter Berücksichtigung anderer Einflüsse, Parameter und Regelvorschriften ein Stellsignal bestimmt und vorgegeben, welches dem Motor über die mehrphasen-stromtragfähige Antriebsleitung zugeführt wird.

Hervorzuheben ist an der Figur 1, dass keine Signalleitung von den motorischen Antrieben direkt zum Antriebsregler führt und über gesonderte Schnittstellen, die nach Spezifikation der Hersteller der Messglieder oder Messfühler aufgebaut sind, am Antriebsregler Steckplätze erhalten. Diese Messleitungen würden vom Motor jeweils ausgehen, im wesentlichen parallel zur stromtragfähigen Antriebsleitung laufen und nahe dem Ausgang dieser Antriebsleitung am Antriebsregler 10 oder 20 in einen entsprechenden Steckplatz einmünden. Diese Signalführung, seien sie analog oder digital, führen zur Übertragung von antriebsbeeinflussenden Signalen nicht auf den Antriebsregler. Die Antriebsregler 10,20 erhalten ihre Signale vielmehr über den Bus 80, der näher den Eingangsschnittstellen 17,27 liegt und es ermöglicht, auch über diesen Weg 17,81,90,88,16 oder 27,83,90,88,16 oder 27,83,90,82,26 oder ... Messwerte aus den Antrieben zu erhalten.

Damit ist zugleich verdeutlicht, dass der zum Motor 15 zugeordnete Antriebsregler 10 über die Bus-Kopplung 17 (den Bus 80) nicht nur Daten seines zugeordneten Motors erhalten kann, sondern auch Betriebssignale, beispielsweise Signale über Temperatur oder Drehzahl, von anderen Motoren, wie dem Motor 25, der als "antriebsferner" Motor bezeichnet werden soll, bezogen auf den "antriebsnahen" Antrieb 15 am Antriebsregler 10. Für den Antriebsregler 20 ist der antriebsnahe Antrieb 25, während der antriebsferne Antrieb derjenige des Antriebsreglers 10 ist, also der Antrieb 15.

Auf diese Weise können mechanisch verkoppelte Wellen über die Antriebsregler 10,20, etc. besser auf der elektrischen Seite gesteuert werden, weil die Antriebsregler sich gegeneinander von den Betriebszuständen der insgesamt am Antriebskonzept beteiligten Antriebe informiert halten können und diese Information sehr aktuell und schnell in allen Antriebsreglern verfügbar ist.

Die Bus-Konzeption 80 erlaubt das Wegfallen sämtlicher dedizierter Schnittstellen an den Antriebsreglern 10,20 und damit fällt auch eine Vielseitigkeit solcher herstellerspezifischer Schnittstellen weg. Die einzig vorgesehene Schnittstelle läuft über den Bus 80, beinhaltet nur genormte, gleiche Bus-Schnittstellen und ist gleichermaßen am Antriebsregler und am Antrieb (dem Motor im motorischen und generatorischen Betrieb oder dem Generator im rein generatorischen Betrieb) vorgesehen.

Die Menge mitzuliefernder Schnittstellen an einem Standard-Antriebsregler 10 oder 20 wird drastisch reduziert. Es wird auch eine verbesserte räumliche Leitungsführung ermöglicht, welche die Ankopplung an den Bus an einer beliebigen Stelle möglich macht, also dort, wo eine von mehreren Sammelschnittstellen 90 angeordnet ist. Diese Schnittstellen müssen nicht mehr zwingend auf der Platine oder dem Modul des Antriebsreglers 10 vorgesehen sein, sondern können völlig losgelöst von diesem an einem beliebigen Ort der Systemanwendung vorgesehen werden.

Die über den Bus geführten Signale sind zunächst Signale in einer Richtung, also vom Motor 15 zu einem Antriebsregler 10 oder 20, alternativ von der Steuerung 1 über dessen Busschnittstelle 2 als Sollwert zu einem oder mehreren der Antriebsregler 10 oder 20. Auch Stellsignale zur Ansteuerung von beispielsweise Bremsen sind Einweg-Signale. Sie können ausgelöst werden von entweder dem Antriebsregler 10 oder 20 zu dem jeweiligen Motor 15 oder 25 über den Bus 80, wenn der jeweilige Motor eine vorgesehene Bremse besitzt, die auf das Steuersignal anspricht, insbesondere eine rein mechanisch wirkende Bremse. Nachdem aber die Leitung 88 zum Motor und vom Motor zurück in zwei Richtungen digitale Signale zu führen hat, wie das Stellsignal zum Einschalten der Bremse oder das Messsignal zur Erfassung der Temperatur des Motors, spricht man von einem bidirektionalen Bus, der Signale in beiden Richtungen D übertragen wird. Der Bus stellt hier keine Punkt-zu-Punkt-Verbindung dar, sondern bildet ein vernetztes System, an dem jeder Bus-Teilnehmer zu jedem Bus-Teilnehmer eine Verbindung aufnehmen kann. Statt einer Vielzahl von verschiedenen Schnittstellen verschiedener Hersteller, gibt es nur noch eine Art von Schnittstelle, die im Beispiel der Figur 1 die Bus-Schnittstelle 17,27,26,16,2 ist.

Die Schnittstelle des Antriebsreglers ist "dieselbe" Schnittstelle wie diejenige des Antriebs. Die Schnittstelle selbst hat als Elektronik eine natürlich an den jeweiligen Motor oder den Antrieb angepasste Auswertung und interne Steuerung, aber diese tritt nach außen über das jeweilige System als "Bus-Teilnehmer" nicht hervor.

Die in den Antrieben vorgehaltene "dezentrale Intelligenz" kann durch eine dort vorgesehene Recheneinheit (Prozessor) bereitgestellt werden, die das jeweilige Interface 16 oder 26 bei Antrieb 15 oder 25 bedient und die von - hier nicht gesondert dargestellten - Sensoren gelieferten Messdaten aufbereitet und für das Kommunikations-Interface und das Prüfprotokoll bereitstellt. In anderer Richtung, also der Gegenrichtung, werden von dem Antriebssystem Steuerbefehle empfangen und von der Recheneinheit ausgewertet, die an der dezentralen Stelle zur Aktivierung von beispielsweise einer Bremse, der Vorgabe eines Bremsmomentes, einer Impulssperre, der Vorgabe von Stromwerten oder der Ansteuerung eines Fremdlüfters dienen. Der Antrieb kann so die für ihn relevanten Aufgaben selbständig übernehmen.

Im Beispiel kann er einen Fremdlüfter ansteuern, in Abhängigkeit von selbst gemessenen oder berechneten Temperaturwerten des Motors. Ein weiteres Beispiel ist der autarke thermische Schutz einer Wicklung bei einer Gleichstrombelastung, veranlasst durch Überstrom-Komparatoren oder Modellrechnungen (im Antrieb) mit dem dort gemessenen Antriebsstrom. Dies ist ein Vorteil gegenüber solchen Systemen, in welchen der Antriebsregler die Überwachung unterschiedlich konstruierter und unterschiedlich ausgelegter Motoren übernehmen muss. Bei der dezentralen Recheneinheit schützt der Motor sich selber und die Recheneinheit ist auf spezifische Belange des Antriebs ausgerichtet und angepasst. Sie ist ihm eng benachbart zugeordnet.

Ein Beispiel für einen Datenverkehr in einem solchen System mit zwei Antrieben und zwei Antriebsreglern zeigt die folgende Tabelle. Es ist dabei davon ausgegangen, dass die Antriebsregler eine Antriebsachse und eine Folgeachse betreiben und eine übergeordnete Steuerung 1 vorgesehen ist, welche in Figur 1 veranschaulicht ist. Als Stellglied ist ein Wechselrichter vorgesehen, die Antriebe sind Drehstrommotoren. Die Bezugszeichen aus Figur 1 werden für die Tabelle übernommen.

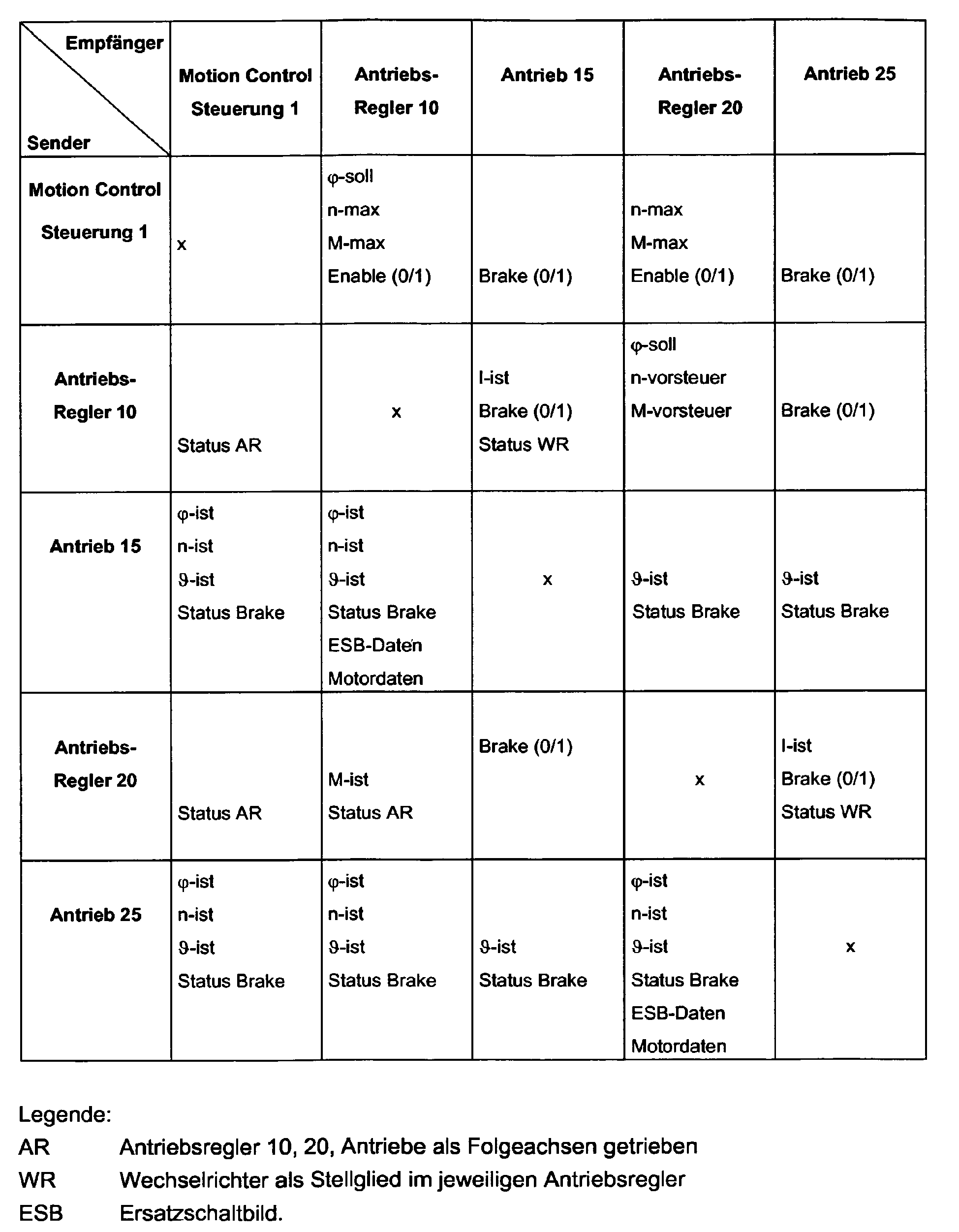

Eine konkrete Aufbauschaltung mit drei Antriebsreglern und drei elektrisch betriebenen Motoren über eine Bus-Steuerung 80 veranschaulicht **Figur 3****.** Eine Antriebssteuerung 10 oder 20 oder 30 hat jeweils einen systematischen Aufbau, wobei zunächst bei der Antriebssteuerung 10 begonnen wird. Die Antriebssteuerung 10 besitzt eine Bus-Schnittstelle 17, zumindest einen Regler 11 und ein Stellglied 12, mit welchem Stellglied ein elektrischer Antrieb 15 betrieben wird. Über das Stellglied 12 wird der hier zugeordnete Antrieb 15 betrieben, im motorischen oder generatorischen Betrieb gehalten, gebremst oder beschleunigt oder hinsichtlich der Lage gesteuert oder geregelt. Demzufolge kann der Reglerabschnitt 11 auch mehrere Regler (in Kaskaden- oder Parallelstruktur) aufweisen, welche unterschiedliche Aufgaben haben. Im Beispiel kann ein Drehzahlregler eingesetzt werden, wozu auch eine Drehzahlmessung erfolgen sollte, die mit der Antriebswelle (dem Abtrieb) des Antriebs 15 gekoppelt ist und als Tachogenerator, als Resolver oder als Inkremental-Geber ausgestaltet sein kann. Je nach Anwendung können unterschiedliche Ausgangssignale entstehen, welche aber nicht dem Antriebsregler über eine dedizierte Schnittstelle zurückgekoppelt werden, sondern ihm wie eingangs beschrieben und später näher erläutert, über den Bus 80 zugänglich wird.

Die Übertragung von Stellsignalen auf das Stellglied, also beispielsweise ein Wechselrichter mit einem Mehrphasen-Ausgang auf einen asynchronen Motor 15, erfolgt über Antriebsleitungen A mit einer so hohen Querschnittsgestaltung, dass sie Antriebsstrom und Bremsstrom ohne wesentliche Verluste übertragen können. Diese Antriebsleitungen sind bei der ersten Antriebssteuerung mit A bezeichnet. Sie greifen in den Klemmkasten des Motors ein und auf entsprechende Schraubklemmen oder Kabelschuhe am Antriebsregler. Meist wird eine geschirmte Leitung aufgrund der hohen Frequenzen bei einem Umrichter eingesetzt.

In gleicher Weise und in gleicher Struktur ist auch die Antriebssteuerung 20 mit dem ihr zugehörigen Antrieb 25 aufgebaut, wie auch die dritte eingezeichnete Antriebssteuerung 30 mit dem ihr zugeordneten Motor 35 als drittem Antrieb.

In der zweiten Antriebssteuerung ist zumindest ein Regler 21, ein Stellglied 22, beispielsweise ein weiterer Umrichter, für den erwähnten zweiten Antrieb 25 vorgesehen, der über das zweite Stellglied 22 angesteuert wird. Vergleichbare stromtragfähige Antriebsleitungen B finden Einsatz, hier als Leitungen B in einem zweiten Dreiphasensystem. Gleiches gilt für das Dreiphasensystem der Antriebsleitungen C der dritten Antriebsgruppe, mit zumindest einem Regler 31, einem Stellglied 32 und dem zugeordneten Antrieb 35.

Alle drei Antriebssysteme haben Bus-Schnittstellen, 17,27 und 37, die gleich aufgebaut sind und dasselbe Protokoll bedienen.

Auch die Antriebe 15,25 und 35 haben Schnittstellen 16,26 und 36, welche in ihnen eingebaut sind, also ihnen eng benachbart zugeordnet werden, sei es eingebaut oder angebaut oder in unmittelbarer Nähe vorgesehen. Auch diese Schnittstellen 16,26 und 36 sind identisch so aufgebaut, wie die Schnittstellen 17, 27 und 37. Symbolisch sind alle diese Schnittstellen auf einen gemeinsamen Bus 80 gelegt, der exemplarisch an der Figur 1 mit einer Sammelschnittstelle beschrieben war. Die logische Verschaltung des Busses 80 zeigt die Figur 3, die physische Aufbauweise des Busses 80 zeigt die Figur 1.

Zur Steuerung des Systems werden Sollwerte über den Bus 80 in die oder zwischen zumindest drei Antrieben übertragen. Es können auch weitere Antriebe oder gesonderte Steuerungen vorgesehen sein, wobei die Busleitungen Kabel sind, die eine Gruppe von Einzeladern jeweils zusammenfassen, beispielsweise vier, sechs oder acht Adern für eine Bus-Leitung. Die Bus-Leitungen waren im Bezugszeichenbereich 80 in der Figur 1 erläutert.

Stellsignale können über den Bus auf die Motoren, beispielsweise Bremsen, übertragen werden, veranlasst von entweder einem oder mehreren der Antriebsregler oder von der Steuerung 1. Messwerte der Motoren, beispielsweise die erwähnten Drehzahlen werden dort gemessen, digital umgesetzt und auf ein Bus-Protokoll übertragen, um sie abrufbar über den Bus 80 für zumindest einen oder mehrere der Antriebsregler zu gestalten. Hier ist zunächst der dem Antrieb nahe Antriebsregler mit den zugeordneten Antriebsleitungen A (Motor 15, Steuerung 10) zu erwähnen. Auch die anderen Antriebssteuerungen 20 oder 30 können auf das Drehzahlsignal des Motors 15 über seine Bus-Schnittstelle 16 zugreifen.

Es fehlt auch in der Figur 3 jegliche Signalverbindung im Messsignalbereich (Drehzahl, Temperatur oder Lage), welche mit einer dedizierten Schnittstelle von einem jeweiligen Antrieb direkt zur Ausgangsseite des Antriebsreglers und von dort über die Platine zu der Regelungsstruktur zurück (Regler 11,21 oder 31) geführt wird. Diese Signale werden digital über den Bus 80 geführt und laufen damit über zumindest zwei, bevorzugt vier oder mehr Schnittstellen, die alle gleich aufgebaut sind.

Nicht gesondert dargestellt, aber ohne weiteres ersichtlich sind Temperaturmessungen an den Antrieben 15, 25 oder 35, welche entweder den Stator oder den Rotor, die Wicklung oder die Lager betreffen können. Diese Temperatursignale werden umgesetzt, auf ein digitales Signal, in einer Schaltungsanordnung, welche dem Motor unmittelbar zugeordnet ist und dann über die Bus-Schnittstelle 16 für den Bus 80 und alle Bus-Teilnehmer zugänglich gemacht. Es versteht sich, dass diese Umsetzung gemäß dem Protokoll des Busses geschieht, der übergeordnet zu spezifischen Herstellernormen von Antriebsreglern, Motoren oder Temperatursensoren rein aus der Datentechnik vorgegeben wird.

Alternativ kann ein Drehzahlsignal auch in den Motoren 15, 25 und 35 gemessen werden, welches digital gewandelt und dann über die Umsetzung als dem Bus protokollgerecht zugespeistes Signal zugeführt wird, abrufbar von allen Bus-Teilnehmern. Die Steuerelektronik zur Ermöglichung der Abrufbarkeit ist dem jeweiligen Antrieb unmittelbar zugeordnet, ebenso wie die zugehörige Schnittstelle mit der an das Protokoll angepassten digitalen Datenumsetzung. Dem so gebildeten Bus-Teilnehmer ist eine Adresse eindeutig im Bus-System zugeordnet, über welche die Daten abrufbar sind oder auf welche die Stellsignale zur Ausführung im Motor übertragen werden.

Die auf den Bus übertragenen Signale werden dort, wo sie angefragt werden, zur Einflussnahme auf die Ansteuerung des Antriebs verwendet, ohne dass diese Messsignale zuvor in einer anderen Weise dem Antriebsregler zur Auswertung übermittelt wurden. Die Übertragung über den Bus stellt die ausgewertete Erstinformation dar, die im Betrieb zur Prozessregelung eingesetzt wird.

Die als elektrische Antriebe beschriebenen Motoren können auch hydraulische Antriebe sein. Entsprechend sind die Antriebsregler dann auf die Hydraulik abgestimmt. Die antriebs-stromtragfähigen Antriebsleitungen A, B und C sind dann ventilgesteuerte Hydraulikleitungen und die Bus-Schnittstellen 16, 26, 36 sind am jeweiligen hydraulischen Antrieb unmittelbar vorgesehen.

Für die eine oder andere Variante der elektrischen oder hydraulischen Antriebstechnik kann der Bus 80 entweder elektrisch ausgestaltet sein oder über Lichtleiter arbeiten. Statt der elektrischen Steckerstellen werden optische Steckerstellen verwendet, zur steck- und lösbaren Aufnahme der Faserenden von Lichtleitern.

## Patentansprüche

1. **Busgekoppeltes Antriebssystem** mit einer Systemstruktur zum Steuern, Stellen und Regeln von mehreren Antrieben (15,25,35),
(i) mit einer ersten (10) und zumindest einer zweiten (20) Antriebssteuerung, welche jeweils eine Bus-Schnittstelle (17,27), einen Regler (11,21) und ein Stellglied (12,22) zur Ansteuerung jeweils eines elektrischen Antriebs (15,25) über das jeweils zugeordnete Stellglied (12,15;22,25) aufweist; wobei - zur Übertragung der jeweiligen Stellsignale des jeweiligen Stellglieds auf den jeweiligen Antrieb - antriebs-stromtragfähige Antriebsleitungen (A,B,C) zwischen dem jeweiligen Stellglied und dem jeweils zugeordneten Antrieb vorgesehen sind;
(ii) mit einem Steuer- und Datenbus (80;81,82,83,88;89;90), geeignet für eine digitale Übertragung von zumindest Sollwerten und Messwerten, bevorzugt auch anderen Steuersignalen und Parametern des Antriebssystems;
(iii) wobei die zumindest beiden elektrischen Antriebe (15,25) eine ihnen jeweils eng benachbart zugeordnete Bus-Schnittstelle (16,26) aufweisen, welche mit dem Steuer- und Datenbus (80,90) gekoppelt ist, zur digitalen Übertragung von Messwerten von dem jeweiligen Antrieb **auf** den Steuer- und Datenbus, entsprechend dem Protokoll des Steuer- und Datenbusses, wobei die enge Nachbarschaft so gewählt ist, dass die jeweilige Bus-Schnittstelle in den jeweiligen Antrieb integriert ist;
(iv) wobei auch die Bus-Schnittstellen (17,27) der Antriebssteuerungen (10,20) mit dem Steuer- und Datenbus (80,90) gekoppelt sind, zur Übertragung von Messwerten zumindest des jeweils über die Antriebsleitungen (A,B) zugeordneten Antriebs zum Regler dieser Antriebssteuerung (10,20) über zumindest zwei Bus-Schnittstellen (16,17;26,27).

2. Antriebssystem nach Anspruch 1, wobei zwischen einer jeweiligen Antriebssteuerung (10,20,30) und dem jeweils über die zugehörige Antriebsleitung (A,B,C) zugeordneten Antrieb (15,25,35) keine Signalleitungen zur Übertragung von Messwerten des jeweiligen Antriebs zur jeweiligen Antriebssteuerung vorgesehen sind.

3. Antriebssystem nach Anspruch 1 oder 2, wobei Messwerte eines ersten Antriebs (15) über zwei oder mehr Bus-Schnittstellen (16,27) einer - diesem Antrieb nicht über antriebs-stromtragfähige Antriebsleitungen zugeordneten - Antriebssteuerung (20) digital über das Protokoll des Steuer- und Datenbusses (80) zuführbar sind oder zugeführt werden, welche als "antriebsferne" Antriebssteuerung ihre Stellsignale nicht dem ersten Antrieb, sondern einem anderen Antrieb (25) über die Antriebsleitung (B) zuspeist.

4. Antriebssystem nach einem voriger Ansprüche, wobei ein Temperatursignal eines der Antriebe die digital übertragenen Messwerte bildet, welches am jeweiligen Antrieb gemessen, beim Antrieb in ein digitales Signal umgesetzt und in der dem Antrieb eng benachbart zugeordneten Bus-Schnittstelle (16) protokollgerecht als Messgröße zur Abholung bereitgestellt wird.

5. Antriebssystem nach einem voriger Ansprüche, wobei ein Drehzahlsignal eines der Antriebe die digital übertragenen Messwerte bildet, welches am jeweiligen Antrieb (15) gemessen, beim Antrieb in ein digitales Signal umgesetzt und in der dem Antrieb eng benachbart zugeordneten Bus-Schnittstelle (16) protokollgerecht als Messgröße zur Abholung bereitgestellt wird.

6. Antriebssystem nach einem voriger Ansprüche, wobei der Steuer- und Datenbus (80;90) eine bidirektionale Übertragung von digitalen Signalen erlaubt und ermöglicht, zu einem Antrieb hin und von einem Antrieb weg, aber die Signale nicht dieselben sind.

7. Antriebssystem nach Anspruch 6, wobei ein Signal zu einem Antrieb hin ein Steuersignal für eine Bremse am Antrieb ist; oder ein Signal von einem Antrieb weg ein Temperatursignal oder Drehzahlsignal des Motors im Antrieb ist.

8. Antriebssystem nach einem voriger Ansprüche, wobei zumindest eine Bus-Sammelschnittstelle (90) mit mehreren Steckerstellen (90a,90b), als Router, Switch oder Hub, vorgesehen ist, auf der mehrere Bus-Verbindungsleitungen (81,82,83,88,89) steckbar und lösbar, bevorzugt elektrisch kontaktierend aufgenommen sind, wobei es einerlei ist, auf welche Steckerstelle welche Bus-Verbindungsleitung eingesteckt oder gepatcht ist.

9. Antriebssystem nach einem voriger Ansprüche, wobei eine Bus-Verbindungsleitung (88) von einem Antrieb wesentlich länger oder wesentlich kürzer ist, als die diesem Antrieb (15) zugeordnete Antriebsleitungen (A) zur Übertragung der Leistungs-Stellsignale.

10. Antriebssystem nach Anspruch 1, wobei die jeweilige Bus-Schnittstelle (16,26) in einem jeweiligen Klemmenkasten oder in einem gesonderten Bauraum zur Aufnahme von Elektronik-Komponenten angeordnet ist.

11. **Verfahren** zur Kopplung von elektrischen Antrieben (15,25,35) und Antriebsreglern (10,20,30) in einem busgekoppelten Antriebssystem nach einem der vorigen Ansprüche, wobei
- dem ersten Antriebsregler (10) Messsignale des ersten und auch des zweiten Antriebs (15,25) über Bus-Schnittstellen zugeführt werden, zur Einflussnahme auf die Ansteuerung des ersten Antriebs, ohne dass diese Messsignale zuvor zur Auswertung über den ersten oder zweiten Antriebsregler (10) geführt oder ihnen anderweitig zur Auswertung zugeführt worden sind.

12. Verfahren nach Anspruch 11, wobei die Bus-Schnittstellen und die Bus-Kopplungen zwischen den Bus-Schnittstellen so ausgebildet sind, um mit Bezug auf die Antriebssteuerung deterministisch zu arbeiten.

## Claims

1. A bus-coupled drive system comprising a system structure for controlling, adjusting and regulating a plurality of drives (15, 25, 35),
(i) comprising a first (10) and at least a second (20) drive control, each including a bus interface (17, 27), a regulator (11, 21) and an actuator (12, 22), for controlling an electrical drive (15, 25) in each case via the respectively assigned actuator (12, 15; 22, 25); wherein drive lines (A, B, C) which are capable of carrying drive current are provided between the respective actuator and the respectively assigned drive, in order to transmit the respective control signals of the respective actuator to the respective drive;
(ii) comprising a control and data bus (80; 81, 82, 83, 88; 89; 90), capable of digitally transmitting at least desired values and measured values, preferably also other control signals and parameters of the drive system;
(iii) wherein the at least two electrical drives (15, 25) comprise a bus interface (16, 26) assigned thereto in close proximity in each case, which bus interface is coupled to the control and data bus (80, 90), in order to digitally transmit measurement values from the respective drive to the control and data bus, according to the control and data bus protocol, the close proximity being selected in such a way that the respective bus interface is integrated into the respective drive;
(iv) wherein the bus interfaces (17, 27) of the drive controls (10, 20) are also coupled to the control and data bus (80, 90) in order to transmit measured values, at least of the drive assigned in each case via the drive lines (A, B), to the regulator of this drive control (10, 20) via at least two bus interfaces (16, 17; 26, 27).

2. The drive system according to claim 1, wherein no signal lines for transmitting measured values of the respective drive to the respective drive control are provided between a respective drive control (10, 20, 30) and the drive (15, 25, 35) which is assigned in each case via the associated drive line (A, B, C).

3. The drive system according to claim 1 or claim 2, wherein measured values of a first drive (15) can be or are digitally supplied by means of the protocol of the control and data bus (80), via two or more bus interfaces (16, 27) of a drive control (20) which is not assigned to the first drive via drive lines which are capable of carrying drive current, which drive control, as a "remote" drive control, does not feed its control signals to the first drive, but to another drive (25) via the drive line (B).

4. The drive system according to any one of the preceding claims, wherein a temperature signal of one of the drives forms the digitally transmitted measured values, which temperature signal is measured at the respective drive, converted into a digital signal at the drive and prepared, according to the protocol, in the bus interface (16) which is assigned in close proximity to the drive, for collection as a measured quantity.

5. The drive system according to any one of the preceding claims, wherein a speed signal of one of the drives forms the digitally transmitted measured values, which temperature signal is measured at the respective drive (15), converted into a digital signal at the drive and prepared, according to the protocol, in the bus interface (16) which is assigned in close proximity to the drive, for collection as a measured quantity.

6. The drive system according to any one of the preceding claims, wherein bidirectional transmission of digital signals towards a drive and away from a drive is allowed and made possible by the control and data bus (80; 90), but the signals are not the same.

7. The drive system according to claim 6, wherein a signal towards a drive is a control signal for a brake at the drive; or a signal away from a drive is a temperature signal or speed signal of the motor in the drive.

8. The drive system according to any one of the preceding claims, wherein at least a collective bus interface (90) having a plurality of sockets (90a, 90b) is provided as a router, switch or hub, in which a plurality of plug-in and detachable bus connection lines (81, 82, 83, 88, 89) are received, preferably in an electrically contacting manner, it making no difference which bus connection line plugs into or patches which socket.

9. The drive system according to any one of the preceding claims, wherein a bus connection line (88) from a drive is substantially longer or substantially shorter than the drive lines (A) assigned to this drive (15) for transmitting power control signals.

10. The drive system according to claim 1, wherein the respective bus interface (16, 26) is arranged in a respective terminal box or in a separate space for receiving electronic components.

11. A method for coupling electrical drives (15, 25, 35) and drive regulators (10, 20, 30) in a bus-coupled drive system according to any one of the preceding claims, wherein
- measured signals of the first and also the second drive (15, 25) are supplied to the first drive regulator (10) via bus interfaces, in order to influence the control of the first drive, without these measured signals being supplied via the first or second drive regulator (10) for evaluation prior to this, or being otherwise supplied thereto for evaluation.

12. The method according to claim 11, wherein the bus interfaces and the bus couplings between the bus interfaces are formed in such a way in order to function in a deterministic manner with regard to the drive control.

## Revendications

1. Système de commande à couplage par bus avec une structure de système pour commander, régler et réguler plusieurs entraînements (15, 25, 35),
(i) avec une première (10) et au moins une deuxième (20) commande d'entraînement, qui présente chaque fois une interface de bus (17, 27), un régulateur (11, 21) et un organe de réglage (12, 22) pour l'amorçage chaque fois d'un entraînement électrique (15, 25) au moyen de l'organe de réglage respectivement associé (12, 15; 22, 25); dans lequel - pour la transmission des signaux de réglage respectifs de l'organe de réglage respectif à l'entraînement respectif - il est prévu des lignes d'entraînement (A, B, C) capables de supporter le courant d'entraînement entre l'organe de réglage respectif et l'entraînement respectivement associé;
(ii) avec un bus de commande et de données (80; 81, 82, 83, 88; 89; 90), approprié pour une transmission numérique au moins de valeurs de consigne et de valeurs de mesure, de préférence aussi d'autres signaux de commande et paramètres du système d'entraînement;
(iii) dans lequel lesdits au moins deux entraînements électriques (15, 25) présentent une interface de bus (16, 26) qui leur est respectivement associée à proximité immédiate, qui est couplée au bus de commande et de données (80, 90), pour la transmission numérique de valeurs de mesure de l'entraînement respectif au bus de commande et de données, selon le protocole du bus de commande et de données, dans lequel la proximité immédiate est choisie de telle manière que l'interface de bus respective soit intégrée dans l'entraînement respectif;
(iv) dans lequel les interfaces de bus (17, 27) des commandes d'entraînement (10, 20) sont également couplées au bus de commande et de données (80, 90), pour la transmission de valeurs de mesure au moins de l'entraînement respectivement associé au moyen des lignes d'entraînement (A, B) au régulateur de cette commande d'entraînement (10, 20) par au moins deux interfaces de bus (16, 17; 26, 27).

2. Système de commande selon la revendication 1, dans lequel il n'est prévu entre une commande d'entraînement respective (10, 20, 30) et l'entraînement associé respectivement (15, 25, 35) par la ligne d'entraînement correspondante (A, B, C) aucune ligne de signaux pour la transmission de valeurs de mesure de l'entraînement respectif à la commande d'entraînement respective.

3. Système de commande selon la revendication 1 ou 2, dans lequel des valeurs de mesure d'un premier entraînement (15) peuvent être ou sont envoyées via deux ou plusieurs interfaces de bus (16, 27) à une commande d'entraînement (20) - non associée à cet entraînement par des lignes d'entraînement capables de supporter le courant d'entraînement - sous forme numérique au moyen du protocole du bus de commande et de données (80), laquelle envoie, comme commande d'entraînement "à distance" ses signaux de réglage non au premier entraînement, mais à un autre entraînement (25) via la ligne d'entraînement (B).

4. Système de commande selon l'une quelconque des revendications précédentes, dans lequel un signal de température d'un des entraînements forme les valeurs de mesure transmises sous forme numérique, signal qui est mesuré à l'entraînement respectif, est converti lors de l'entraînement en un signal numérique et est préparé, dans l'interface de bus (16) associée à proximité immédiate de l'entraînement, suivant le protocole en une grandeur de mesure en vue de son prélèvement.

5. Système de commande selon l'une quelconque des revendications précédentes, dans lequel un signal de vitesse de rotation d'un des entraînements forme les valeurs de mesure transmises sous forme numérique, signal qui est mesuré à l'entraînement respectif (15), est converti lors de l'entraînement en un signal numérique et est préparé, dans l'interface de bus (16) associée à proximité immédiate de l'entraînement, suivant le protocole en une grandeur de mesure en vue de son prélèvement.

6. Système de commande selon l'une quelconque des revendications précédentes, dans lequel le bus de commande et de données (80, 90) autorise et permet une transmission bidirectionnelle de signaux numériques, vers un entraînement et à partir d'un entraînement, mais les signaux ne sont pas les mêmes.

7. Système de commande selon la revendication 6, dans lequel un signal en direction d'un entraînement est un signal de commande pour un frein sur l'entraînement; ou un signal à partir d'un entraînement est un signal de température ou un signal de vitesse de rotation du moteur dans l'entraînement.

8. Système de commande selon l'une quelconque des revendications précédentes, dans lequel il est prévu au moins une interface de couplage de bus (90) avec plusieurs points d'enfichage (90a, 90b), sous forme de routeur, de commutateur ou de concentrateur, sur laquelle plusieurs lignes de raccordement de bus (81, 82, 83, 88, 89) peuvent être engagées et libérées, et étant de préférence reprises en contact électrique, dans lequel il est indifférent de savoir quelle ligne de raccordement de bus est engagée ou collée sur quel point d'enfichage.

9. Système de commande selon l'une quelconque des revendications précédentes, dans lequel une ligne de raccordement de bus (88) d'un entraînement est sensiblement plus longue ou sensiblement plus courte, que les lignes d'entraînement (A) associées à cet entraînement (15) pour la transmission des signaux de réglage de puissance.

10. Système de commande selon la revendication 1, dans lequel l'interface de bus respective (16, 26) est disposée dans une armoire à bornes respective ou dans un espace de montage séparé destiné à recevoir des composants électroniques.

11. Procédé de couplage d'entraînements électriques (15, 25, 35) et de régulateurs d'entraînement (10, 20, 30) dans un système de commande à couplage par bus selon l'une quelconque des revendications précédentes, dans lequel
- on envoie au premier régulateur d'entraînement (10) des signaux de mesure du premier et aussi du deuxième entraînements (15, 25) via des interfaces de bus, afin d'influencer l'amorçage du premier entraînement, sans que ces signaux de mesure aient été au préalable envoyés pour évaluation par le premier ou le deuxième régulateur d'entraînement (10) ou leur aient été fournis d'une autre manière pour évaluation.

12. Procédé selon la revendication 11, dans lequel les interfaces de bus et les couplages de bus entre les interfaces de bus sont réalisés de façon à travailler par déterminisme par rapport à la commande d'entraînement.
